# EUROPÄISCHE PATENTSCHRIFT

(11) **EP 1 261 798 B1**
(45) Veröffentlichungstag und Bekanntmachung des Hinweises auf die Patenterteilung: **21.09.2005**
(21) Anmeldenummer: 01913716.5
(22) Anmeldetag: 24.02.2001
(51) Int. Cl.: E21B 10/44

(54) **GESTEINSBOHRER**
ROCK DRILL
OUTIL DE FORAGE DE ROCHE

(30) Priorität: 09.03.2000 DE 10011108
(43) Veröffentlichungstag der Anmeldung: 04.12.2002
(73) Patentinhaber: ROBERT BOSCH GMBH, 70442 Stuttgart (DE)
(72) Erfinder: PEETZ, Wolfgang, 88273 Fronreute-Blitzenreute (DE)
(74) Vertreter: Otten, Herbert
(86) Internationale Anmeldenummer: PCT/DE2001/000720
(87) Internationale Veröffentlichungsnummer: WO 2001/066899

(56) Entgegenhaltungen:
- EP-A- 0 322 554
- EP-A- 0 790 092
- DE-A- 3 609 911
- DE-A- 19 707 115
- DE-A- 19 753 731
- DE-B- 2 358 447
- US-A- 2 635 856
- US-A- 5 918 105

## Beschreibung

Die Erfindung betrifft einen Gesteinsbohrer nach dem Oberbegriff des Patentanspruchs 1.

### Stand der Technik:

Aus der US 2,635,856 ist ein Gesteinsbohrer für handgeführte Hammer-, Schlag- und Drehbohrmaschinen bekannt, welcher einen Bohrerkopf mit einer sich hieran anschließenden spiralförmigen Förderwendel und einem sich hieran anschließenden Einspannschaft aufweist, wobei der Bohrerkopf einen Hartmetall-Einsatz aufweist, welcher sich in einer Richtung quer über den Bohrerkopf erstreckt und in einem Aufnahmeschlitz im Bohrerkopf eingebettet ist, wobei der Bohrerkopf im Bereich der Einbettung des Hartmetall-Einsatzes eine Abstützung des Hartmetall-Absatzes aufweist und wobei der Auslauf der Förderwendel bis in den Abstützbereich des Hartmetall-Einsatzes geführt ist.

Weiterhin ist aus der DE 36 09 911 A1 eine Gesteinsbohrer für Hammerbohrmaschinen bekannt, bei welchem zum Bohrerkopf hin eine Zunahme der Kernstärke der Förderwendelnut erfolgt.

Ein bekannter Gesteinsbohrer besteht aus einem Wendelschaft sowie einem Bohrerkopf, in welchem ein in Seitenansicht, sich über den gesamten Bohrer-Nenndurchmesser erstreckendes, dachförmiges Hartmetall-Schneidelement eingesetzt ist (DE 197 34 094 A1). Der Bohrerkopf weist hierfür eine axial verlaufende, schlitzförmige Vertiefung auf, in welche die Hartmetall-Schneidplatte eingesetzt und eingelötet wird.

Um eine ausreichende Standfestigkeit des Bohrwerkzeuges zu erzielen, muss die Hartmetall-Schneidplatte eine gewisse Mindestdicke oder Mindeststärke aufweisen, was einen entsprechend breiten Aufnahmeschlitz für die Hartmetall-Schneidplatte erfordert. Ein solcher, sich über den gesamten Durchmesser erstreckender Aufnahmeschlitz für die Hartmetall-Schneidplatte schwächt jedoch die am Bohrerkopf zur Verfügung stehende Wandstärke zur Abstützung der Hartmetall-Schneidplatte.

Leistungsstarke Gesteinsbohrer benötigen Förderwendeln mit hohen Volumen der Förderwendelnuten, um den Abtransport einer möglichst großen Menge von Bohrmehl zu ermöglichen. Ein hohes Nutenvolumen wird durch eine große Nutentiefe erzielt, was jedoch automatisch zu einer geringeren Kerndicke oder Kernstärke des verbleibenden Kernquerschnitts der Förderwendel führt.

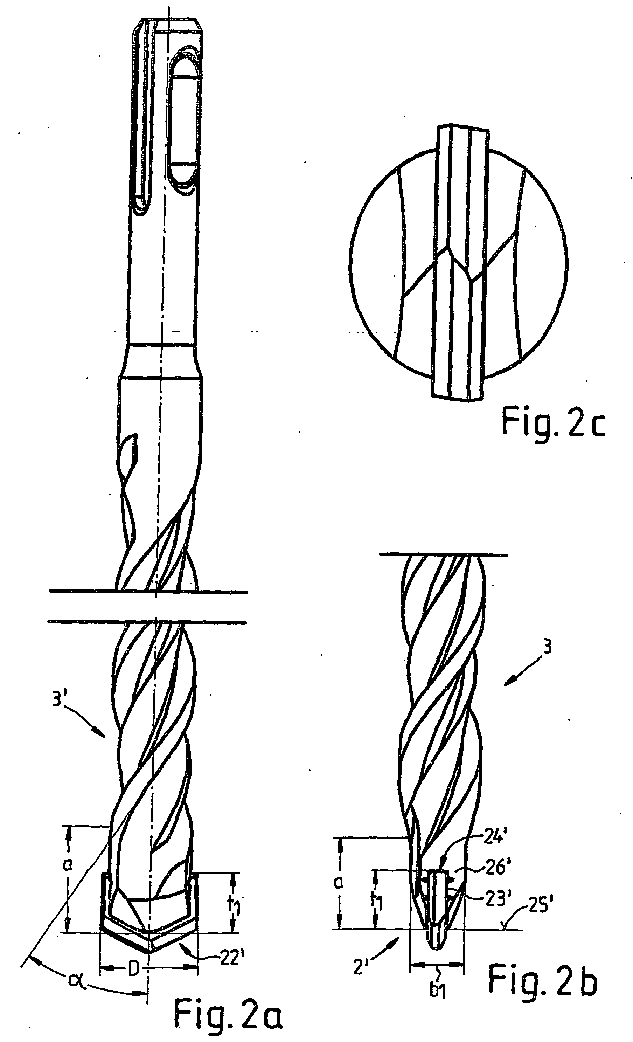

Würde man einen solchen Nutenquerschnitt bei gleichbleibender Nutentiefe bis in den oberen Bereich des Bohrerkopfes führen, so würde aufgrund des gleichbleibenden Förderwendelsteges kein Material am Bohrerkopf vorhanden sein, um eine Hartmetall-Schneidplatte möglichst beidseitig und vollständig in den Bohrerkopf einzubetten. Aus diesem Grund wird z. B. gemäß der Darstellung in den Figuren 4, 5 und 7 der genannten DE 197 34 094 A1 die Förderwendel nicht bis in den vorderen Bereich des Bohrwerkzeugs bzw. Bohrerkopfes geführt, sondern die Förderwendel endet in einem gewissen Abstand unterhalb des Bohrerkopfes und insbesondere unterhalb des Schlitzgrundes zur Aufnahme der Hartmetall-Schneidplatte. Dies ist in einer Darstellung nach dem Stand der Technik in den Figuren 2a, 2b der vorliegenden Erfindung schematisch dargestellt. Bei der Herstellung des Bohrwerkzeugs wird deshalb die zur Bohrerlängsachse hin gemessene Förderwendelsteigung a im Bereich des Bohrerkopfes gegen Null gefahren, das heißt, die zur Herstellung der Förderwendelnut verwendete, schräg gestellte Profilschleifscheibe wird im Endbereich der Förderwendel quasi achsparallel zum Bohrerkopf hin herausgefahren, ohne dass sich in diesem Bereich noch das Bohrwerkzeug dreht. Die Förderwendel wird deshalb nicht bis zum vorderen Ende des Wendelschaftes fortgeführt, sondern als eine Art flache; meißelförmige Spitze ausgebildet. Dadurch dass die Förderwendel nicht bis zum vorderen Bereich des Bohrerkopfes fortgeführt ist, verbreitert sich in diesem Bereich der Rückensteg der Förderwendel, so dass Material zur Aufnahme und Einbettung der Hartmetall-Schneidplatte entsteht. Dies ist in Figur 2a, 2b jeweils in Seitenansicht zum Stand der Technik dargestellt.

Eine solche Herstellung führt demnach zu einem flachen, meißelförmigen Bohrerkopf, in welchem ein entsprechender Längsschlitz zur Aufnahme der Hartmetall-Schneidplatte eingebracht werden kann. Dabei kann der Übergang zwischen Hartmetall-Schneidplatte und Förderwendel angeschliffen werden, wie dies mit den Flächenabschnitten 25, 26 in den oben genannten Figuren 4, 5, 7 der DE 197 34 094 gezeigt ist.

Aufgrund dieser Ausgestaltung des Bohrerkopfes beziehungsweise des Übergangs der Förderwendel zum Bohrerkopf entsteht eine Art meißelförmige, das heißt flache Bohrerkopfgeometrie, die eine hohe Abtragsleistung aufweist. Nachteilig ist es jedoch, dass die Führungseigenschaften des Bohrwerkzeugs in diesem Bereich ausschließlich durch die Hartmetall-Schneidplatte erfolgt, da der Bereich der ringförmigen Abstützung der Förderwendel bzw. des Wendelschaftes in diesem vorderen flachen Bereich des Bohrerkopfes nicht vorhanden ist, sondern erst dann wirksam wird, wenn die vollständig ausgebildete Förderwendel im Bohrloch greift.

### Aufgabe und Vorteile der Erfindung:

Der Erfindung liegt die Aufgabe zugrunde, ein Bohrwerkzeug zu schaffen, welches die oben genannten Nachteile nicht aufweist und bei welchem insbesondere kurz nach dem Anbohren eine gute Führung des Bohrwerkzeugs im Bohrloch auch im Bohrerkopfbereich erzielt wird. Ein weiterer Vorteil ist eine besonders robuste Einbettung der HM-Schneidplatte.

Diese Aufgabe wird ausgehend von einem Gesteinsbohrer nach dem Oberbegriff des Anspruchs 1 durch die kennzeichnenden Merkmale des Anspruchs 1 gelöst.

In den Unteransprüchen sind vorteilhafte und zweckmäßige Weiterbildungen des erfindungsgemäßen Bohrwerkzeuges angegeben.

Der Erfindung liegt der Kerngedanke zugrunde, die Förderwendel möglichst weit bis zur Bohrerspitze hin fortzuführen, um hierdurch optimale Förder- und Führungseigenschaften des Bohrwerkzeugs auch im Bohrerkopfbereich zu erzielen. Dabei muss jedoch sicher gestellt werden, dass eine ausreichende möglichst vollflächige Abstützung eines im Bohrerkopf eingebetteten Hartmetall-Einsatzes, der vorzugsweise als HM-Schneidplatte ausgebildet ist, gewährleistet wird. Diese sich technisch ansich widersprechenden Gegebenheiten werden dadurch in Einklang gebracht, in dem die Rückenstegbreite der Förderwendel des Bohrerkopfes kontinuierlich oder diskontinuierlich verbreitert wird, was - bei vorzugsweise gleichbleibender Förderwendelsteigung - durch eine kontinuierliche Zunahme des Kernquerschnitts bzw. einer entsprechenden Abnahme der Nutentiefe erfolgt. Dies geschieht bei der Herstellung des Bohrwerkzeugs z. B. durch ein kontinuierliches Herausfahren des Schleif- bzw. Fräswerkzeugs aus der Förderwendelnut. Hierdurch stellt sich eine Verbreiterung des Förderwendelstegs zum Bohrerkopf hin ein, wodurch sich eine Vergrößerung des wirksamen Querschnitts zum Einbringen eines Aufnahmeschlitzes für die Hartmetall-Schneidplatte einstellt.

Endet demzufolge beim Stand der Technik die Förderwendel im Bereich der Schlitztiefe zur Aufnahme der Hartmetall-Schneidplatte, so wird bei der vorliegenden Erfindung die Förderwendel bis weit in den Kopfbereich, das heißt, bis über die Höhe des Schlitzgrundes hinaus geführt. Trotzdem stellt sich die gewünschte Verbreiterung der Rückenstegfläche ein, so dass ein wirksamer Schlitz für die Hartmetall-Schneidplatte dennoch eingebracht werden kann.

Die Förderwendel wird demzufolge bis in den Bereich der Flächenabschnitte zur seitlichen Abstützung der Hartmetall-Schneidplatte geführt. Dabei wird vorzugsweise keine Steigungsänderung gegenüber der Steigung der Förderwendel durchgeführt, das heißt, der Steigungswinkel wird nicht wie beim Stand der Technik auf den Wert Null gebracht. Die Zunahme der Kernstärke der Fördernut im Bereich des Bohrerkopfes kann kontinuierlich oder diskontinuierlich erfolgen. Üblicherweise wird dies kontinuierlich durch ein gleichmäßiges Herausfahren des Werkzeugs vollzogen.

Die Zunahme der Kernstärke der Fördernut zur Bildung einer ausreichenden Abstützung der Hartmetall-Schneidplatte erfolgt vorzugsweise derart, dass eine beidseitige Einbettung, das heißt beidseitige Abstützung der Hartmetall-Schneidplatte erfolgt. Selbstverständlich ist die Abstützung insbesondere im hinter der Freifläche der Schneidplatte liegenden Bereich besonders wichtig.

Gemäß der Erfindung ist es demzufolge nötig, die Förderwendelnut unmittelbar in dem Bereich beginnen zu lassen, der als Flächenabschnitt zur Abstützung der Hartmetall-Schneidplatte ausgebildet ist.

In Weiterbildung der Erfindung ist es vorgesehen, die Förderwendel ein- oder mehrgängig spiralförmig auszubilden, wobei umlaufenden Hauptstege und umlaufenden Nebenstege gebildet sind, die vorzugsweise nach der älteren Anmeldung DE 197 53 731 A1 des Anmelders ausgebildet sind. Hierauf wird ausdrücklich bezug genommen. Bei diesem Stand der Technik wird der Zugang zu jeder Nebenfördernut sowie zu den Hauptfördernuten durch einen äußerst schlanken Bohrerkopf erzielt, der durch einen geraden, achsparallelen Auslauf der spiralförmigen Förderwendel im Bereich des Bohrerkopfes erzielt wird. Auch bei einer solchen speziellen Förderwendel mit den damit verbundenen vorteilhaften Eigenschaften kann die erfindungsgemäße Lehre vorteilhaft verwirklicht werden. Weitere Ausbildungen hierzu sind in den Unteransprüchen angegeben. Dabei weisen beispielsweise die Förderkanten der Haupt- und/oder Nebenstege zur Ausbildung von Bohrmehltragflächen vorzugsweise einen etwa rechtwinkligen Verlauf zur Bohrerlängsachse auf. Der Nebensteg der Nebenförderwendel kann mit einem spitz zulaufenden Rücken ausgebildet sein. Es können jedoch auch andere Querschnittsformen für die Nebenförderwendel verwendet werden, wie dies im einzelnen in der DE 197 53 731 A1 angegeben ist.

Weitere Einzelheiten und Vorteile der Erfindung ergeben sich aus der Beschreibung des nachfolgenden Ausführungsbeispiels.

Es zeigen
- Fig. 1a: einen Seitenansicht auf einen erfindungsgemäßes Bohrwerkzeug,
- Fig. 1b: eine Seitenansicht der Darstellung nach Fig. 1a,
- Fig. 1c: eine Draufsicht auf das Werkzeug nach Fig. 1b bzw. Fig. 1a,
- Fig. 2a bis Fig. 2c: eine Ansicht des Bohrwerkzeugs nach dem Stand der Technik

### Beschreibung des Ausführungsbeispiels

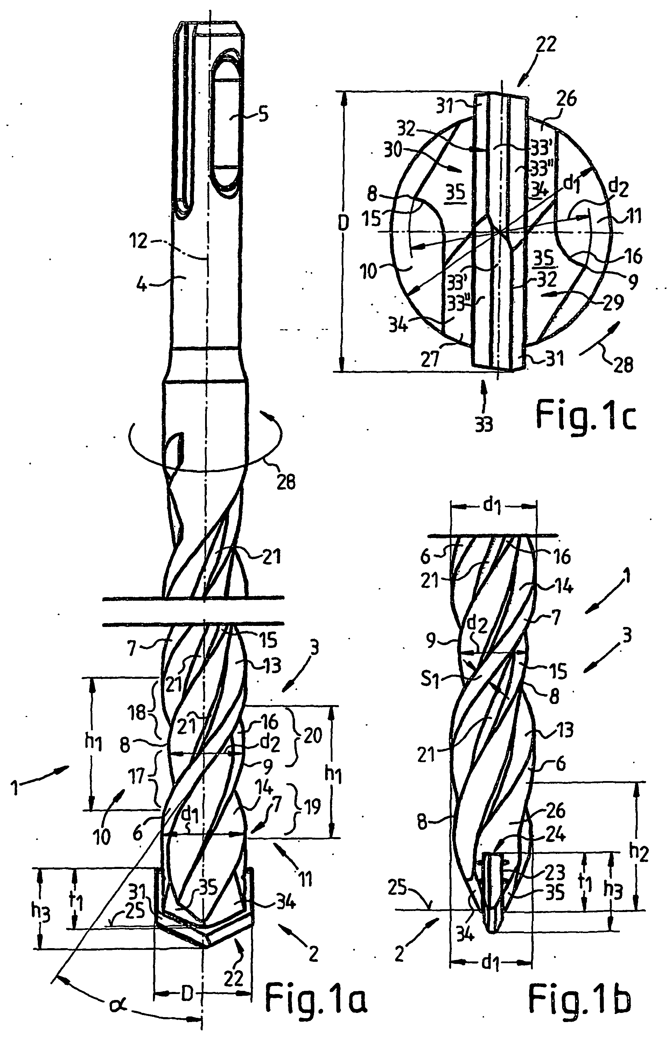

Der in den Figuren 1a, 1b jeweils in Seitenansicht dargestellte Gesteinsbohrer 1 besteht aus einem Bohrerkopf 2, einem sich daran anschließenden Wendelschaft mit zweigängiger Spiralförmiger Förderwendel 3 und einem sich daran anschließenden Einspannschaft 4 zum Einsetzen in eine Antriebsmaschine. Der Einspannschaft 4 weist Aufnahmemittel 5 zum Einsatz in eine Hammerbohrmaschine auf (SDS-Plus-Schaft).

Der Wendelschaft bzw. die Förderwendel 3 ist in ihrem Aufbau prinzipiell gleich ausgebildet, wie dies in der Druckschrift DE 197 35 731 A1 des Anmelders und insbesondere in den dortigen Figuren 1 und 2 prinzipiell beschrieben ist. Hierauf wird hiermit ausdrücklich Bezug genommen. Dabei ist im vorliegenden Ausführungsbeispiel die Förderwendel 3 als zweigängige Förderwendel ausgebildet, wobei zwischen zwei spiralförmig umlaufenden Hauptstegen 6, 7 jeweils eine Haupt-Abfuhrnut 10, 11 über einen Höhenabschnitt h₁ gebildet ist.

Diese Höhenabschnitte h₁ sind nur symbolisch in Figur 1a dargestellt, um den Bereich einer solchen Haupt-Abfuhrnut 10, 11 darzustellen. Die Hauptstege 6, 7 der Förderwendel 3 weisen einen Außendurchmesser d₁ auf und weisen weiterhin z. B. einen rechteckförmigen oder halbtrapezförmigen Querschnitt mit senkrecht zur Bohrerlängsachse 12 liegenden Förderkanten 13, 14 auf.

Innerhalb jeder Haupt-Abfuhrnut 10, 11 mit den sie begrenzenden Hauptstegen 6, 7 befinden sich jeweils ein ebenfalls spiralförmig umlaufender Nebensteg 8, 9 mit einem kleineren Außendurchmesser d₂. Der Nebensteg 8, 9 ist als Vorsprung innerhalb der Haupt-Abfuhrnut 10, 11 ausgebildet. Der Hauptsteg 6 bildet demnach die seitliche, etwa radial verlaufende Förderkante 13 für das zu fördernde Bohrmehl, der Hauptsteg 7 die entsprechende Förderkante 14 für entsprechendes Bohrmehl. Gleichermaßen besitzt der Nebensteg 8 ebenfalls eine etwa senkrecht zur Bohrerlängsachse stehende Förderkante 15 für Bohrmehl und der weitere Nebensteg 9 eine entsprechende Förderkante 16 für entsprechendes Bohrklein. Hieraus folgt, dass die Haupt-Abfuhrnut 10 in zwei Abfuhrnuten 17, 18 mit den Förderkanten 13, 15 und die weitere Haupt-Abfuhrnut 11 in zwei weitere Abfuhrnuten 19, 20 mit den Förderkanten 14, 16 aufgeteilt ist. Es handelt sich demnach um eine zweigängige Förderwendel 3 mit den Hauptstegen 6, 7 mit jeweils in die Bohrmehlabfuhrnut 10, 11 eingebetteten Nebenförderstegen 8, 9. Die Förderwendel 3 weist neben den weitestgehend radial verlaufenden Förderkanten 13 bis 16 achsparallele Abschnitte im Nutengrund auf, die mit Bezugszeichen 21 angedeutet sind.

Die Stegbreite der Hauptstege 6, 7 beträgt s₁. Die Nebenstege 8, 9 sind derart ausgebildet, dass sie an ihrem Außenumfang nahezu spitz zulaufen. Das Durchmesserverhältnis d₁ zu d₂ beträgt ungefähr d₂ ≅ 0,7 bis 0,9 x d₁.

Im übrigen wird zur Erläuterung des Aufbaus des Wendelschafts 3 nochmals auf die DE 197 53 731 A1 verwiesen. Eine solche Wendel ist z. B. im spanabhebenden Verfahren, d. h. z. B. mit profilierter Schleifscheibe oder einem entsprechenden Fräswerkzeug hergestellt. Die in den Figuren 2a bis 2c dargestellte Förderwendel 3' ist grundsätzlich gleich aufgebaut wie zuvor beschrieben. Dies gehört gemäß der DE 197 53 731 A1 zum Stand der Technik. Um bei diesem Stand der Technik eine Hartmetall-Schneidplatte 22' einsetzen zu können, ist der Bohrerkopf 2' mit einem Aufnahmeschlitz 23' versehen, der eine axiale Eindringtiefe t₁ aufweist. Der Schlitzgrund ist mit Bezugszeichen 24' versehen.

Beim Stand der Technik endet die Förderwendel 3' etwa in einem Abstand a unterhalb der Bohrervorderkante 25'. Dabei ist die Bohrervorderkante 25' der vordere Teil des Bohrers ohne eingesetzte Hartmetall-Schneidplatte 22'. Würde man die Förderwendel bis zur Bohrervorderkante auslaufen lassen, so würde sich die Nut bis zu diesem vorderen Bereich erstrecken, so dass nur schmale Förderwendelstege vorhanden wären. In solch schmale Förderwendelstege kann eine Hartmetall-Schneidplatte nicht derart eingesetzt werden, dass sie beidseitig im Bohrerkopf abgestützt gehalten ist. Demzufolge endet die Förderwendelnut in einem Abstand a vor der Bohrervorderkante, so dass sich der in Figur 2b dargestellte verbreiterte Rückensteg 26' ergibt (Breite b₁), der zur beidseitigen Abstützung der Hartmetall-Schneidplatte dient. Der Abstand a in welchem die Förderwendel endet, wird etwa gleich groß wie der Nenndurchmesser D, das heißt die Breite der Hartmetall-Schneidplatte 22' gewählt. Dies erfolgt durch ein gradliniges Herausfahren der Schleifscheibe, ohne dass sich das Werkzeug in diesem Bereich noch weiter dreht. Der Steigungswinkel α wird damit zu Null Grad.

Wie aus der Figur 2b ersichtlich, stellt sich durch diese Maßnahme ein ausreichender Abstützquerschnitt für die Hartmetall-Schneidplatte dar. Gleichwohl wird jedoch das Bohrwerkzeug in diesem Bereich äußerst schlank ausgebildet, was zumindest die Führungseigenschaften des Bohrwerkzeugs beim Anbohren solange verschlechtert, bis die eigentliche Förderwendel eingreift.

Dies wird nach der vorliegenden Erfindung gemäß der Darstellungen Figur 1a bis 1c dadurch verbessert, dass die Förderwendel 3 und insbesondere die Abfuhrnuten 17 bis 20 bis in den vorderen Bereich des Bohrerkopfes 2 geführt werden. Der Abschnitt a aus Figur 2a, 2b entfällt damit, so dass die z. B. in Figur 1a dargestellte Förderkante 14 nahezu bis zur Bohrerforderkante 25 geführt ist. Auf jeden Fall reichen die Abfuhrnuten 17 bis 20 bis in den Bereich hinein, der durch die Tiefe t₁ zur Herstellung des Aufnahmeschlitzes 23 mit Schlitzgrund 24 benötigt wird. Damit sich dennoch eine allmähliche Verbreiterung der Hauptstege 6, 7 ergibt, wird die Nutentiefe ab einem Höhenabstand h₂ vor der Bohrervorderkante 25 allmählich reduziert, so dass sich die Hauptstege 6, 7 allmählich verbreitern, wie dies mit Bezugszeichen 26 als sich verbreiternder Rückensteg dargestellt ist. Mit der Abnahme der Nutentiefe wächst der Kernquerschnitt, so dass sich ein entsprechend breiter Rückensteg 26, 27 einstellen kann, in welchem wenigstens ein entsprechender Aufnahmeschlitz 23 zur Aufnahme eines Hartmetall-Einsatzes 22 und vorzugsweise einer Hartmetall-Schneidplatte 22 eingebracht werden kann. Dabei entspricht der Höhenabschnitt h₂ ungefähr der Steigungshöhe h₁ der Haupt-Abfuhrnuten 10, 11.

Die hierdurch gebildete Verbreiterung der Rückenstege 26, 27 ist auch in Figur 1c dargestellt. In einen solchen Bohrerkopf lässt sich problemlos eine Hartmetall-Schneidplatte 22 in üblicher Bauform einsetzen. Die Hartmetall-Schneidplatte 22 weist einen Durchmesser D (Nenndurchmesser) auf. Die Höhe der Schneidplatte ist mit h₃ angegeben.

Die Drehrichtung des Bohrwerkzeugs zeigt Pfeil 28. Die dachförmige Hartmetall-Schneidplatte 22 weist zwei Schneiden 29, 30 auf, mit in Drehrichtung weisenden Spanflächen 31, mit stirnseitigen, auf einer kegelmantelfläche liegenden Schneidkanten 32 und mit einer rückseitigen Freifläche 33, die im Ausführungsbeispiel in zwei Freiflächenabschnitte 33', 33'' aufgeteilt sind.

Wie sich aus den Figuren 1a bis 1c ergibt, wird durch die allmähliche Vergrößerung der Kernstärke beim Auslauf der Förderwendel im Bohrerkopfbereich eine Vergrößerung der Rückenstegbreiten erzielt, so dass der Aufnahmeschlitz 23 für die Hartmetall-Schneidplatte problemlos in den Bohrerkopf eingebracht werden kann, obwohl sich die Förderwendel bis in die vorderen Flächenabschnitte 34, 35 erstreckt, wie beispielsweise durch Anschleifen des Bohrerkopfes hergestellt sind. Auf jeden Fall wird die Förderwendel bis in den Bereich des Bohrerkopfes geführt, der durch die Tiefe t₁ zur Herstellung des Aufnahmeschlitzes 23 definiert ist. Das heißt die Förderwendel 3 wird soweit in den Bohrerkopf 2 fortgeführt, dass sie sich bis oberhalb des Schlitzgrundes 24 erstreckt. Diese Erstreckung kann sich zum Beispiel bis zur halben Tiefe t₁ des Aufnahmeschlitzes 23 fortsetzen.

Die Erfindung ist nicht auf das beschriebene und dargestellte Ausführungsbeispiel beschränkt. Sie umfaßt auch vielmehr alle Varianten und Weiterbildungen im Rahmen der Schutzrechtsansprüche. Beispielsweise kann in den Bohrerkopf anstelle einer Hartmetall-Schneidplatte auch ein mehrschneidiger Hartmetall-Einsatz, z. B. ein Hartmetall-Kreuz oder dergleichen eingesetzt werden.

### Bezugszeichenliste:

- 1: Gesteinsbohrer
- 2: Bohrerkopf
- 3: Förderwendel
- 4: Einspannschaft
- 5: Aufnahmemittel
- 6: Hauptsteg
- 7: Hauptsteg
- 8: Nebenteg
- 9: Nebenteg
- 10: Haupt-Abfuhrnut
- 11: Haupt-Abfuhrnut
- 12: Bohrerlängsachse
- 13: Förderkante
- 14: Förderkante
- 15: Förderkante
- 16: Förderkante
- 17: Abfuhrnut
- 18: Abfuhrnut
- 19: Abfuhrnut
- 20: Abfuhrnut
- 21: achsparalleler Abschnitt
- 22: Hartmetall-Schneidplatte
- 23: Aufnahmeschlitz
- 24: Schlitzgrund
- 25: Bohrervorderkante
- 26: Rückensteg
- 27: Rückensteg
- 28: Pfeil/Drehrichtung
- 29: Schneide
- 30: Schneide
- 31: Spanfläche
- 32: Schneidkante
- 33: Freifläche
- 34: Flächenabschnitt
- 35: Flächenabschnitt

## Patentansprüche

1. Gesteinsbohrer für handgeführte Hammer-, Schlag- und Drehbohrmaschinen mit einem Bohrerkopf (2), einer sich hieran anschließenden ein- oder mehrgängigen spiralförmigen Förderwendel (3) und einem sich hieran anschließenden Einspannschaft (4), wobei der Bohrerkopf (2) einen Hartmetall-Einsatz (22) aufweist, der sich zumindest in einer Richtung quer über den Bohrerkopf (2) erstreckt und in wenigstens einem Aufnahmeschlitz (23) im Bohrerkopf (2) eingebettet ist und wobei der Bohrerkopf (2) im Bereich der Einbettung des Hartmetall-Einsatzes (22) eine Abstützung des Hartmetall-Einsatzes (22) aufweist und der Auslauf der Förderwendel (3) bis in den Abstützbereich des Hartmetall-Einsatzes (22) geführt ist, **dadurch gekennzeichnet, dass** eine Abnahme der Tiefe der Abfuhrnut (10, 11 bzw. 17 bis 20) vor und im Bereich von Flächenabschnitten (34, 35) des Bohrerkopfes (2) zur Einbettung des Hartmetall-Einsatzes (22) kontinuierlich erfolgt, wobei die Kernstärke der Förderwendel (3) zum Bohrerkopf (2) hin kontinuierlich zunimmt.

2. Gesteinsbohrer nach Anspruch 1, **dadurch gekennzeichnet, dass** eine Verbreiterung der Rückenstege (6, 7) der Förderwendel (3) zur Einbettung des Hartmetall-Einsatzes (22) bis in den Bereich des Aufnahmeschlitzes (23) erfolgt.

3. Gesteinsbohrer nach Anspruch 1 oder 2, **dadurch gekennzeichnet, dass** eine Förderwendel (3) in den Bereich von Flächenabschnitten (34, 35) des Bohrerkopfes (2) vorzugsweise ohne Steigungsänderung gegenüber der Steigung (α) der Förderwendel (3) fortgeführt wird, wobei die Flächenabschnitte (34, 35) im Bereich der Einbettung des Hartmetall-Einsatzes (22) vorgesehen sind.

4. Gesteinsbohrer nach einem der vorhergehenden Ansprüche, **dadurch gekennzeichnet, dass** die Zunahme der Kernstärke der Förderwendel (3) im Bohrerkopfbereich derart erfolgt, dass eine vorzugsweise beidseitige, nahezu vollflächige Einbettung beziehungsweise eine beidseitige Abstützung des Hartmetall-Einsatzes (22) erfolgt.

5. Gesteinsbohrer nach einem der vorhergehenden Ansprüche, **dadurch gekennzeichnet, dass** die Förderwendel (3) ohne geraden Auslauf unmittelbar im Bereich des Hartmetall-Einsatzes (22) am Bohrerkopf (2) mit gleichbleibender Steigung (α) beginnt.

6. Gesteinsbohrer nach einem der vorhergehenden Ansprüche, **dadurch gekennzeichnet, dass** dem Bohrerkopf (2) sich eine ein- oder mehrgängige spiralförmige Förderwendel (3) anschließt, wobei die Förderwendel (3) spiralförmig umlaufende Hauptstege (6, 7) mit einem Außendurchmesser (d₁) und ebenfalls spiralförmig umlaufende Nebenstege (8, 9) mit geringerem Außendurchmesser (d₂) aufweist, wobei die Haupt- und Nebenstege (6 bis 9) Förderkanten (13 bis 16) in Abfuhrnuten (17 bis 20) zum Bohrmehltransport aufweisen.

7. Gesteinsbohrer nach einem der vorhergehenden Ansprüche, **dadurch gekennzeichnet, dass** die Förderwendel (3) zweigängig ausgebildet ist, mit zwei spiralförmig umlaufenden Hauptstegen (6, 7) und zwei jeweils dazwischen liegenden Nebenstegen (8, 9).

8. Gesteinsbohrer nach einem der vorhergehenden Ansprüche, **dadurch gekennzeichnet, dass** der Nebensteg (8, 9) einen spitz zulaufenden Rücken aufweist.

9. Gesteinsbohrer nach einem der vorhergehenden Ansprüche, **dadurch gekennzeichnet, dass** der Nebensteg (8, 9) als eine im Querschnitt rechteckförmige, trapezförmige, halbtrapezförmige, dreieckförmige, ballige, halbkreisförmige Erhebung gegenüber dem Nutengrund ausgebildet ist, wobei vorzugsweise der Rücken des Nebensteges (8, 9) spitz, flach oder rund zulaufend ausgebildet ist.

10. Gesteinsbohrer nach einem der vorhergehenden Ansprüche, **dadurch gekennzeichnet, dass** zur Bildung von Bohrmehltragflächen die Förderkanten (13 bis 16) der Hauptstege (6, 7) und/oder der Nebenstege (8, 9) einen etwa rechtwinkligen Verlauf zur Bohrerlängsache (12) aufweisen.

11. Gesteinsbohrer nach einem der vorhergehenden Ansprüche, **dadurch gekennzeichnet, dass** der Hartmetall-Einsatz (22) als vorzugsweise dachförmige Hartmetall-Schneidplatte (22) ausgebildet ist.

## Claims

1. Rock drill for hand-guided rotary hammers, percussion drilling machines and rotary drilling machines, having a drill head (2), a single- or multi-start conveying helix (3) adjoining this drill head (2), and a clamping shank (4) adjoining this conveying helix (3), the drill head (2) having a carbide insert (22) which extends at least in a direction transversely across the drill head (2) and is embedded in at least one locating slot (23) in the drill head (2), and the drill head (2) having a support for the carbide insert (22) in the region of the embedding of the carbide insert (22), and the runout of the conveying helix (3) is run right into the supporting region of the carbide insert (22), **characterized in that** a decrease in the depth of the disposal flute (10, 11 or 17 to 20) is effected continuously before and in the region of surface sections (34, 35) of the drill head (2) for the embedding of the carbide insert (22), the core thickness of the conveying helix (3) increasing continuously towards the drill head (2).

2. Rock drill according to Claim 1, **characterized in that** the lands (6, 7) of the conveying helix (3), for embedding the carbide insert (22), are widened right into the region of the locating slot (23).

3. Rock drill according to Claim 1 or 2, **characterized in that** a conveying helix (3) is continued into the region of surface sections (34, 35) of the drill head (2), preferably without a change in pitch relative to the helix angle (α) of the conveying helix (3), the surface sections (34, 35) being provided in the region of the embedding of the carbide insert (22).

4. Rock drill according to one of the preceding claims, **characterized in that** the increase in the core thickness of the conveying helix (3) in the drill head region is effected in such a way that the carbide insert (22) is preferably embedded on both sides, virtually over the full surface area, or is supported on both sides.

5. Rock drill according to one of the preceding claims, **characterized in that** the conveying helix (3), without a straight runout, starts directly in the region of the carbide insert (2) at the drill head (2) with uniform helix angle (α).

6. Rock drill according to one of the preceding claims, **characterized in that** a single- or multi-start conveying helix (3) adjoins the drill head (2), the conveying helix (3) having helically encircling main webs (6, 7) with an outside diameter (d₁) and likewise helically encircling secondary webs (8, 9) with a smaller outside diameter (d₂), the main and secondary webs (6 to 9) having conveying edges (13 to 16) in disposal flutes (17 to 20) for transporting drillings.

7. Rock drill according to one of the preceding claims, **characterized in that** the conveying helix (3) is of two-start design, having two helically encircling main webs (6, 7) and two respective secondary webs (8, 9) lying in between.

8. Rock drill according to one of the preceding claims, **characterized in that** the secondary web (8, 9) has a land tapering to a point.

9. Rock drill according to one of the preceding claims, **characterized in that** the secondary web (8, 9) is designed as a prominence relative to the flute root, this prominence being rectangular, trapezoidal, semi-trapezoidal, triangular, crowned, hemispherical in cross section, the land of the secondary web (8, 9) preferably being designed so as to taper to a point or to a flat or round end.

10. Rock drill according to one of the preceding claims, **characterized in that**, to form bearing surfaces for drillings, the conveying edges (13 to 16) of the main webs (6, 7) and/or of the secondary webs (8, 9) run approximately at right angles to the drill longitudinal axis (12).

11. Rock drill according to one of the preceding claims, **characterized in that** the carbide insert (22) is designed as a preferably roof-shaped carbide cutting tip (22).

## Revendications

1. Fleuret à roche pour marteau perforateur, perceuse à percussion et à rotation, tenus à la main, comprenant une tête de fleuret (2), suivie d'une hélice de transport hélicoïdale (3) à un ou plusieurs filets puis d'une queue d'emmanchement (4), la tête (2) du fleuret présentant un insert plat (22) en métal dur qui déborde au moins transversalement de la tête (2) du fleuret et qui est emboîtée dans au moins une fente de réception (23) ménagée dans la tête (2) du fleuret, la tête (2) du fleuret présentant un soutien de l'insert plat (22) dans la région d'emboîtement de celui-ci (22) et le débouché de l'hélice de transport (3) se prolongeant jusque dans la région du soutien de l'insert (22),
**caractérisé en ce que**
la profondeur de la gorge de dégagement (10, 11 ou 17 à 20) décroît de façon continue en avant et dans la région des segments de surface (34, 35) de la tête (2) du fleuret en direction de l'emboîtement de l'insert plat (22), l'épaisseur de noyau de l'hélice de transport (3) croissant continuellement en direction de la tête (2) du fleuret.

2. Fleuret à roche selon la revendication 1,
**caractérisé en ce que**
les nervures à arêtes (6, 7) de l'hélice de transport (3) s'élargissent en direction de l'emboîtement de l'insert plat (22), jusque dans la région de la fente de réception (23).

3. Fleuret à roche selon la revendication 1 ou 2,
**caractérisé en ce qu'**
une hélice de transport (3) est prolongée dans la région des segments de surface (34, 35) de la tête de fleuret (2), de préférence sans modification du pas par rapport au pas (α) de l'hélice de transport (3), les segments de surface (34, 35) étant prévus dans la région de l'emboîtement de l'insert plat (22).

4. Fleuret à roche selon une des revendications précédentes,
**caractérisé en ce que**
l'accroissement de l'épaisseur du noyau de l'hélice de transport (3) dans la région de la tête de fleuret se produit de telle manière qu'il se forme un emboîtement, de préférence bilatéral, sur presque toute la surface, ou un soutien bilatéral de l'insert plat (22).

5. Fleuret à roche selon une des revendications précédentes,
**caractérisé en ce que**
l'hélice de transport (3) commence sans débouché droit, directement dans la région de l'insert (22), sur la tête (2) du fleuret avec un pas (α) constant.

6. Fleuret à roche selon une des revendications précédentes,
**caractérisé en ce qu'**
à la tête (2) du fleuret fait suite une hélice de transport hélicoïdale (3) à un ou plusieurs filets, l'hélice de transport (3) présentant des nervures principales (6, 7) s'étendant en hélice et ayant un diamètre extérieur (d₁) et des nervures auxiliaires (8, 9), s'étendant de même en hélice et possédant un diamètre extérieur (d₂) plus petit, les nervures principales et auxiliaires (6 à 9) présentant des chants de transport (13 à 16) dans les gorges de dégagement (17 à 20) pour le transport de la poussière de forage.

7. Fleuret à roche selon une des revendications précédentes,
**caractérisé en ce que**
l'hélice de transport (3) est à deux filets et comprend deux nervures principales (6, 7) s'étendant en hélice et deux nervures auxiliaires (8, 9) placées entre les premières.

8. Fleuret à roche selon une des revendications précédentes,
**caractérisé en ce que**
la nervure auxiliaire (8, 9) présente une arête se terminant en pointe.

9. Fleuret à roche selon une des revendications précédentes,
**caractérisé en ce que**
la nervure auxiliaire (8, 9) est constituée par une protubérance s'élevant sur le fond de la gorge et qui, en section transversale, est rectangulaire, trapézoïdale, semi-trapézoïdale, triangulaire, bombée ou semi-circulaire, l'arête de la nervure auxiliaire (8, 9) se terminant de préférence par une forme pointue, plate ou ronde.

10. Fleuret à roche selon une des revendications précédentes,
**caractérisé en ce que**
pour la formation de surfaces de transport de la poussière de forage, les chants de transport (13 à 16) des nervures principales (6, 7) et/ou des nervures auxiliaires (8, 9) présentent un tracé à peu près perpendiculaire à l'axe longitudinal (12) du fleuret.

11. Fleuret à roche selon une des revendications précédentes,
**caractérisé en ce que**
l'insert plat (22) est constitué par une plaquette de coupe en métal dur (22) de préférence en forme de toit.
